# EUROPÄISCHE PATENTSCHRIFT

(11) **EP 2 560 038 B1**
(45) Veröffentlichungstag und Bekanntmachung des Hinweises auf die Patenterteilung: **07.01.2015**
(21) Anmeldenummer: 12177417.8
(22) Anmeldetag: 23.07.2012
(51) Int. Cl.: G02B 7/00, G02B 7/02

(54) **Optikträger und Montageverfahren**
Holder for optical element and assembly method
Monture pour élément optique et procédé de montage

(30) Priorität: 18.08.2011 DE 102011052793
(43) Veröffentlichungstag der Anmeldung: 20.02.2013
(73) Patentinhaber: SICK AG, 79183 Waldkirch (DE)
(72) Erfinder: Scholder, Jochen, 79183 Waldkirch (DE)
(74) Vertreter: Hehl, Ulrich

(56) Entgegenhaltungen:
- DE-B3- 10 303 549
- US-A1- 2006 033 431
- US-A1- 2008 158 696
- US-A1- 2008 225 403

## Beschreibung

Die vorliegende Erfindung betrifft einen Optikträger für einen optoelektronischen Sensor und ein Verfahren zur Montage des Optikträgers.

Bekannt sind Optikträger, welche in einem Gehäuse einer optoelektronischen Sensoranordnung eingesetzt werden, um ein optisches Element und ein zugehöriges Sende- und/oder Empfangselement bzw. die zugehörige Sende- und Empfangselektronik der optoelektronischen Sensoranordnung relativ zueinander zu positionieren. Dazu weist der Optikträger wenigstens eine Klemmfeder und wenigstens ein Gegenlager auf, wobei zwischen der wenigstens einen Klemmfeder und dem wenigstens einen Gegenlager das optische Element klemmbar ist.

Bei den bekannten Optikträgern sind die Klemmfeder und das Gegenlager in einem Teil integriert und somit in ihrer relativen Lage zueinander fixiert. Um eine exakte Positionierung zu ermöglichen, müssen die Klemmfeder und das Gegenlager mit hoher Genauigkeit gefertigt werden, was hohe Herstellkosten, insbesondere hohe Werkzeugkosten, zur Folge hat. Trotzdem können oft inakzeptable Toleranzen auftreten. Zudem ist das Klemmmaß für das optische Element durch die Integration von Klemmfeder und Gegenlager in einen einteiligen Optikträger begrenzt, was dazu führt, dass eine Lockerung des Sitzes des optischen Elements auftreten kann.

Bekannt ist weiter die Befestigung einer Linse durch Kleben. Dies bedingt jedoch einen aufwändigen Fügeprozess und es besteht die Gefahr, dass der Klebstoff auf die optischen Teile gelangt und die Funktion der Optik negativ beeinflusst.

Weiter ist es bekannt eine Linse durch Schweißen, Schrauben oder Verstemmen zu befestigen. Diese Verfahren erfordern jedoch viel Platz auf einem Optikträger, der meist nicht zur Verfügung steht. Weiter verursachen diese Verfahren aufwändige Fertigungsprozesse und schränken eine Werkstoffauswahl signifikant ein.

Die DE 693 22 822 T2 offenbart eine zusammendrückbare und elastische Dichtung zwischen einer Linse und einem Linsenklemmring. Das Zusammendrücken der Dichtung sorgt für die Einspannung der Linse.

In der DE 35 21 640 C2 sind zur symmetrischen Anordnung einer Linse in einer Halterung einzelne elastische Rippen vorgesehen.

Die US 2008-0225403 A1 zeigt einen optischen Aufbau, wobei Linsen durch Klemmeinheiten fixiert werden und anschließend durch eine Hülse fixiert werden.

Die DE 103 03 549 B3 offenbart einen Federring, der in eine Wandung eingeschoben wird. In dem Federring kann eine Linse positioniert werden. Durch Verschieben eines Keilringes werden die Streifen des Federrings gegen die Linse gepresst und diese arretiert.

Die US 2006-0033431A1 offenbart eine LED, die ein Übergehäuse aufweist, das über Schnapphaken in einer Platine befestigt wird.

Die US 2008-0158696 A1 offenbart einen Halter mit Schnappmitteln für eine Linse, wobei der Halter in einem weiteren Griff fixiert ist.

Die Aufgabe besteht darin, eine vereinfachte Befestigung eines optischen Elements bereitzustellen, die wenig Bauraum beansprucht und größere Toleranzen für die notwendigen Komponenten ermöglicht.

Die Aufgabe wird gelöst durch einen Optikträger gemäß Anspruch 1 und durch ein Verfahren zur Montage eines Optikträgers gemäß Anspruch 9.

Bei der Montage des Optikhalters in den Optikträger biegen sich beim Zusammenfügen die Klemmhaken nach Innen in Richtung des optischen Elements. Hierdurch entstehen axiale und radiale Kraftkomponenten, wodurch das optische Element im Optikhalter fixiert wird. Ein Zurückbiegen der Klemmhaken ist in der endgültigen Montageposition nicht möglich, da die Klemmhaken durch den Optikträger gesichert sind.

Die Klemmhaken dürfen sich auch beim Einsetzen des optischen Elements plastisch verformen. Die plastische Verformung der Klemmhaken wird beim Einsetzen des Optikhalters in den Optikträger zurückgeformt. Beim Einsetzen des Optikhalters in den Optikträger werden die Klemmhaken plastisch verformt. Hierzu können Überdeckungen von Klemmhaken und optischem Element vorgesehen werden, die beim Klemmen des optischen Elements zu einer plastischen Verformung des Klemmhakens führen. Dadurch können die Klemmhaken gegenüber herkömmlichen Schnapphaken mit einer größeren Klemmfläche ausgebildet sein und aus einer größeren Auswahl an Werkstoffen hergestellt sein als Schnapphaken nach dem Stand der Technik. Weiter kann durch die plastische Verformung der Klemmhaken beim Einsetzen des Optikhalters in den Optikträger ein Formschluss zwischen Optikhalter und optischem Element erreicht werden, was zu einer dauerhaft sicheren Fixierung des optischen Elements führt.

Gemäß der Erfindung können über den Optikträger auf die Klemmhaken auch höhere Radialkräfte auf das optische Element erzeugt werden als bei einem Schnapphaken nach dem Stand der Technik, der lediglich Federkräfte ausübt, da die Klemmhaken gemäß der Erfindung durch die Führung im Optikträger mechanisch verstärkt gestützt werden. Durch die Stütze der Klemmhaken durch den Optikträger sind bei der Herstellung der Teile niedrigere Toleranzen möglich und eine dauerhaft sichere Fixierung möglich, so dass es nicht zu einer Lockerung des optischen Elements kommt.

Gemäß der Erfindung kann das optische Element ohne die Verwendung oder den Einsatz von Klebstoff fixiert werden. Weiter ist die erfindungsgemäße konstruktive Lösung raumsparend, da keine zusätzlichen Oberflächen für eine Klebefixierung vorgesehen werden müssen.

In Weiterbildung der Erfindung ist das optische Element eine Linse und/oder eine Blende und/oder ein Filter und/oder ein Spiegel. Die erfindungsgemäße Fixierung eignet sich für eine Linse, eine Blende, ein optisches Filter oder einen optischen Spiegel gleichermaßen. Der Optikhalter ist dazu ausgebildet, die verschiedenen optischen Elemente aufzunehmen. Die optischen Elemente werden erfindungsgemäß sehr präzise positioniert werden. Es ist gemäß der Erfindung auch vorgesehen, dass der Optikhalter mehrere gleiche oder verschiedene optische Elemente aufnimmt, welche durch Aufnahme des Optikhalters in dem Optikträger gleichzeitig fixiert werden.

Bevorzugt weist der Optikträger und/oder der Optikhalter eine Öffnung für Lichtstrahlen auf. Dadurch kann der Optikhalter und/oder Optikträger als rohrförmiger Tubus, also als Element, welches störende Reflexionen von Lichtstrahlen vermeiden kann, ausgebildet werden.

In einer bevorzugten Ausführungsform weist der Optikträger einen Anschlag für den Optikhalter auf. Durch den Anschlag wird vorteilhaft eine Fügerichtung begrenzt. Der Anschlag kann dabei durch eine schräge Fläche ausgebildet sein oder bei einer runden Ausführung des Optikhalters durch einen Konus.

In Weiterbildung der Erfindung ist der Optikhalter im Optikträger fixiert. Durch die Fixierung des Optikhalters im Optikträger, beispielsweise durch ein Sicherungselement, wie eine Scheibe, einen Splint oder äquivalente Mittel wird der Optikhalter im Optikträger gesichert. Eine Fixierung oder Sicherung des Optikträgers ist auch durch Kleben möglich, da durch die erfindungsgemäße konstruktive Umsetzung Klebestellen zwischen Optikhalter und Optikträger geschaffen sind, welche außerhalb des optischen Elements liegen, beispielsweise Bohrungen im Optikträger.

In Weiterbildung der Erfindung ist zwischen einer Auflagefläche des Optikhalters für das optische Element und dem optischen Element ein elastisches Ausgleichselement angeordnet. Durch das elastische Ausgleichselement können Klemmkräfte ausgeglichen werden, um das optische Element nicht zu hohen Klemmkräften auszusetzen. Weiter werden durch das elastische Ausgleichselement Kräfte aufgrund von Temperaturschwankung aufgenommen. Das elastische Ausgleichselement kann auch als Dichtelement ausgebildet sein, um eine dichte Verbindung zwischen optischem Element und Optikhalter zu erhalten.

In einer bevorzugten Ausführungsform ist der Optikträger und/oder der Optikhalter aus Kunststoff hergestellt. Dadurch kann der Optikträger und/oder der Optikhalter sehr einfach hergestellt werden. Bevorzugt ist der Optikträger und/oder der Optikhalter aus schwarzem Kunststoff hergestellt mit einer matten Oberflächenstruktur, so dass durch den Kunststoff störendes Licht absorbiert wird.

In Weiterbildung der Erfindung sind der Optikträger und/oder der Optikhalter und/oder das optische Element als Spritzgussteile hergestellt. Durch die Herstellung als Spritzgussteile sind die Teile sehr preiswert herstellbar. Hinterschnitte der Klemmhaken können aus einer Spritzgussform entformt werden, indem ein Formkern, welcher eine Innenkontur abbildet, vor einem Herausziehen um eine Längsachse gedreht wird.

Im Folgenden wird die Erfindung anhand von Ausführungsbeispielen unter Bezugnahme auf die Zeichnung im Einzelnen erläutert.

In der Zeichnung zeigt:
- Figur 1: einen optoelektronischen Sensor;
- Figur 2: einen Optikträger mit einem Optikhalter und einem optischen Element in einer Explosionsdarstellung;
- Figur 3: den Optikträger mit dem Optikhalter während eines Montageschrittes;
- Figur 4: den Optikträger mit dem Optikhalter in montiertem Endzustand;
- Figur 5: eine Schnittdarstellung von Optikträger und Optikhalter gemäß Figur 3;
- Figur 6: eine Schnittdarstellung von Optikträger und Optikhalter gemäß Figur 4;
- Figur 7: eine Schnittdarstellung gemäß Figur 6 mit einem elastischen Ausgleichselement.

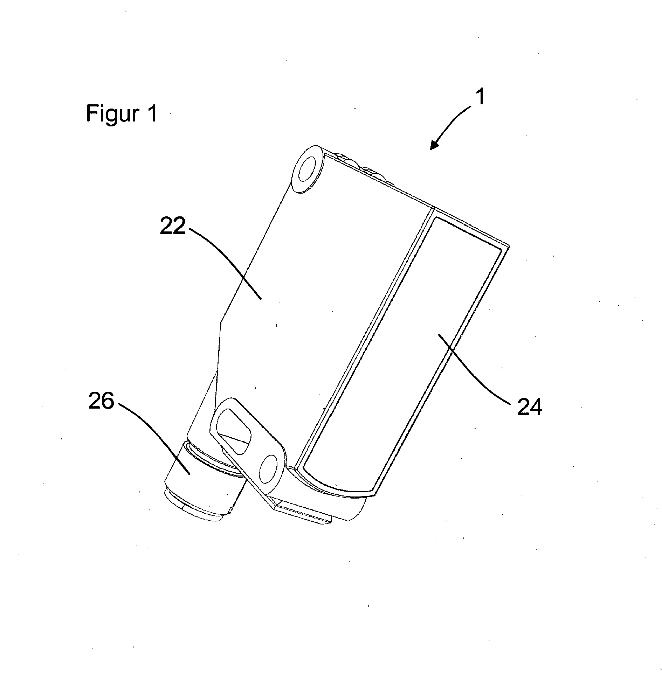

Figur 1 zeigt einen optoelektronischen Sensor 1, beispielsweise eine Lichtschranke mit einem Gehäuse 22, einer Frontscheibe 24 und einem elektrischen Anschluss 26. Derartige optoelektronische Sensoren 1 sind als Lichtschranke, Reflexionslichtschranke, Lichttaster, Entfernungsmesser ausgebildet. Hierzu sind in dem Gehäuse 22 wenigstens ein Lichtsender und/oder wenigstens ein Lichtempfänger angeordnet, die mit einer elektronischen Steuer- und Auswerteeinheit verbunden sind. Für eine Beeinflussung der Lichtstrahlen des Lichtsenders und/oder Lichtempfängers sind hinter der Frontscheibe 24 im Gehäuseinneren optische Komponenten angeordnet. Die Lichtstrahlen gelangen nach einer Remission oder Reflexion auf einem Objekt durch die Frontscheibe auf den Lichtempfänger zur Objektdetektion. Das Gehäuse 22 kann aus Kunststoff oder Edelstahl hergestellt sein. Für die Frontscheibe 24 wird meist eine Kunststoffscheibe oder auch eine Glasscheibe verwendet. In allen nachfolgenden Figuren sind gleiche Teile mit identischen Bezugszeichen versehen.

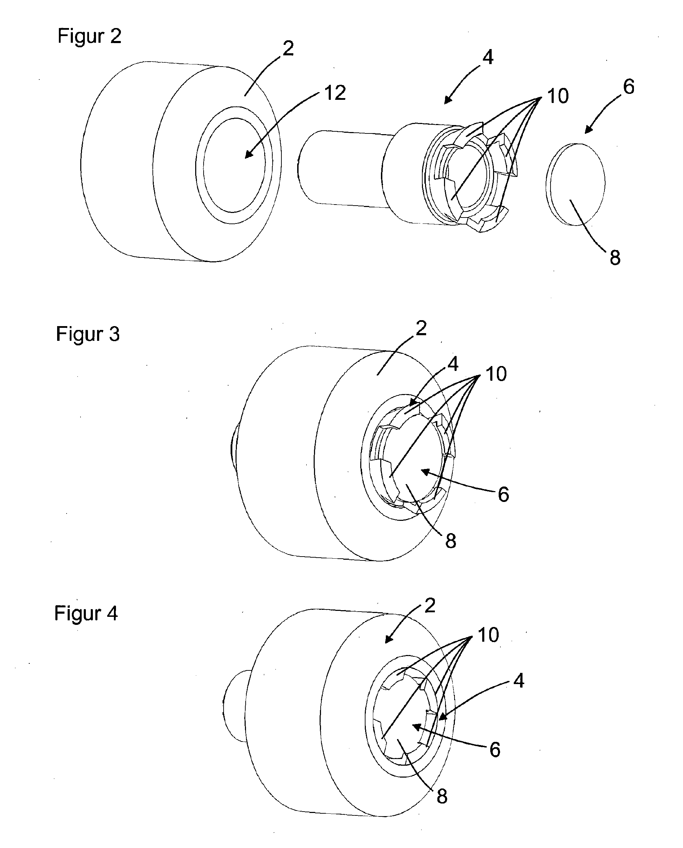

Figur 2 zeigt einen Optikträger 2, der in dem optoelektronischen Sensor 1 gemäß Figur 1 eingesetzt wird. Figur 2 zeigt den Optikträger 2 mit einem Optikhalter 4 und einem optischen Element 6, wobei der Optikträger 2 eine Aufnahme 12 für den Optikhalter 4 aufweist und der Optikhalter 4 mindestens zwei, in dem gezeigten Beispiel vier Klemmhaken 10 zur Aufnahme und Befestigung des optischen Elements 12 aufweist. Durch den Optikträger 2 werden die Klemmhaken 10 in ihrer endgültigen Position gemäß Figur 4 fixiert.

Bei dem optischen Element 6 kann es sich wie in dem gezeigten Beispiel gemäß Figur 2 um eine Linse 8 handeln. Es kann sich aber auch um eine Blende, ein Filter, ein Spiegel oder ein anderes optisches Element 6 handeln.

Der Optikträger 2 weist eine äußere Bauform auf, die für eine Integration in ein Sensorgehäuse geeignet ist. In diesem Beispiel weist der Optikträger 2 eine ringförmige Form auf mit einer zylindrischen Aufnahme 12 für den Optikhalter 4.

Der Optikhalter 4 weist eine rohrförmige zylindrische Form auf, die in der Mitte entlang einer optischen Achse eine Öffnung für Lichtstrahlen aufweist. Die äußere zylindrische Form des Optikhalters 4 entspricht den Abmessungen der zylindrischen Aufnahme 12 des Optikträgers 2, so dass der Optikhalter 4 in den Optikträger 2 eingeschoben oder eingesetzt werden kann.

Weiter weist der Optikhalter 4 an einem Ende des rohrförmigen Abschnittes Klemmhaken 10 auf zur Aufnahme des optischen Elements 6.

Zunächst wird das optische Element 6 in die Klemmhaken 10 des Optikhalters 4 eingesetzt. Die Klemmhaken 10 spreizen sich dabei nach außen, um das optische Element 6 aufzunehmen. Die Klemmhaken 10 können sich dabei auch plastisch verformen. Jedoch wird das optische Element 6 durch die Klemmhaken 10 gehalten.

Danach wird der Optikhalter 4 mit dem eingesetzten optischen Element 6 in die Aufnahme 12 des Optikträgers 2 eingeschoben. Dies ist in Figur 3 dargestellt. Figur 3 zeigt den Optikhalter 4, der sich noch nicht in einer Endposition im Optikträger 2 befindet. Die Klemmhaken 10 ragen noch aus dem Optikträger 2 hervor. In dieser Position könnte das optische Element 6 auch eingesetzt oder ausgetauscht werden.

In Figur 4 ist der Optikträger 2 mit dem Optikhalter 4 in einer finalen Endposition dargestellt. Der Optikhalter 4 ist dabei ganz in den Optikträger 2 eingeschoben. Dabei sind die Klemmhaken 10 durch den inneren Durchmesser der Aufnahme 12 für den Optikhalter 4 des Optikträgers 2 nach innen gebogen und in ihrer Endposition fixiert. Die Klemmhaken 10 werden dabei beim Einschieben des Optikhalters 4 gegen das optische Element 6 gedrückt, so dass das optische Element 6 in seiner finalen Position fixiert ist. Das optische Element 6 kann in dieser finalen Position nicht mehr bewegt oder entfernt werden. Das optische Element 6 ist dadurch fixiert ohne den Einsatz von Klebstoffen oder Schnappmechanismen. Zum Austausch des optischen Elements 6 braucht der Optikhalter 4 nur ein Stück aus dem Optikträger 2 herausgezogen zu werden. Dann kann das optische Element 6 ausgetauscht werden.

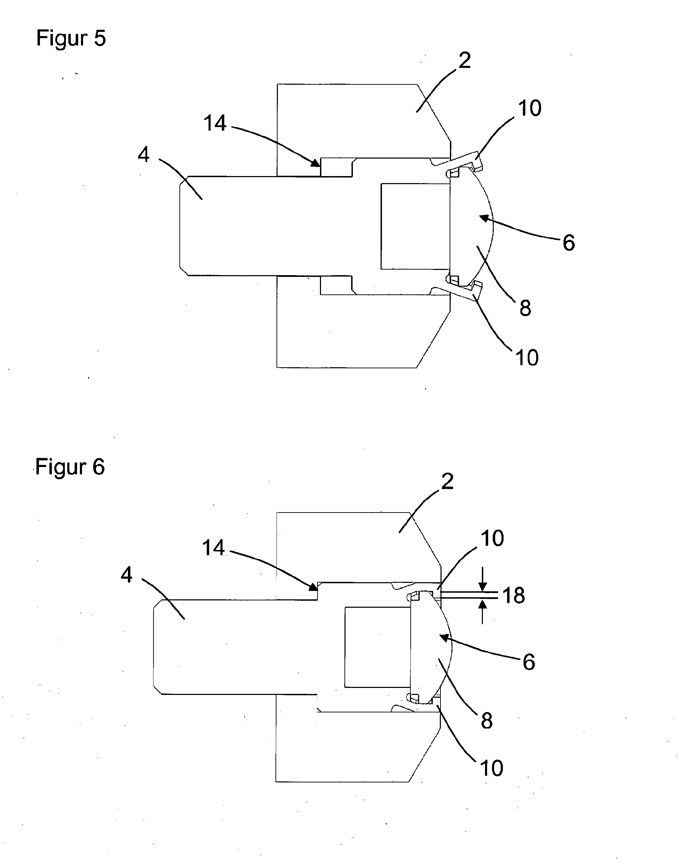

Figur 5 zeigt den Optikträger 2 mit dem Optikhalter 4 und dem optischen Element 6 in einer Schnittdarstellung gemäß Figur 3. Der Optikhalter 4 ist dabei in einer Montageposition dargestellt vor der finalen Endposition. In der Schnittdarstellung ist dabei der Anschlag 14 des Optikträgers 2 für den Optikhalter 4 dargestellt. Die Klemmhaken 10 umgreifen dabei das optische Element 6 und ragen jedoch noch aus der Öffnung des Optikträgers 2. In dieser Position kann das optische Element 6 in den Optikhalter 4 eingesetzt werden.

Figur 6 zeigt den Optikträger 2 mit dem Optikhalter 4 und dem optischen Element 6 in einer Schnittdarstellung gemäß Figur 4. Der Optikhalter 4 ist dabei in seiner finalen Endposition in dem Optikträger 2 dargestellt. Der Optikhalter 4 wird bei Einschieben in den Optikträger 2 von dem Anschlag 14 in einer Einschiebeposition begrenzt. Während des Einschiebens werden die Klemmhaken 10 von dem Optikträger 2 gegen das optische Element 6 gedrückt und fixieren das optische Element 6 in seiner finalen Sollposition.

Weiter kann eine Überdeckung 18 zwischen dem optischem Element 6 und den Klemmhaken 10 des Optikhalters 4 vorgesehen sein, welche beim Einführen der Klemmhaken 10 in den Optikhalter 4 zu einer plastischen Verformung der Klemmhaken 10 führt.

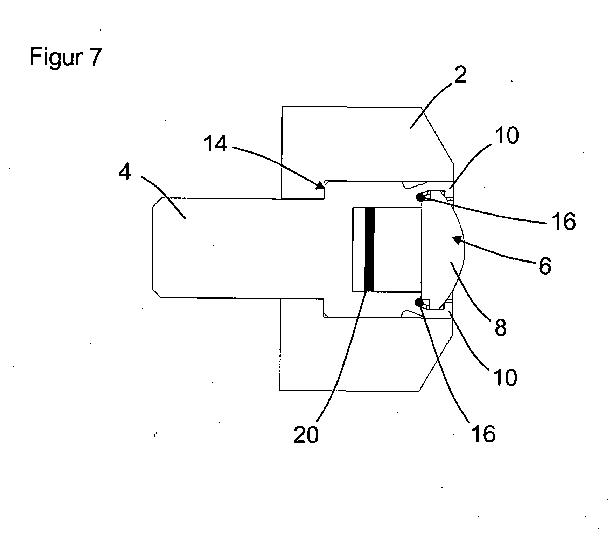

Figur 7 zeigt den Optikträger 2 mit dem Optikhalter 4 und dem optischen Element 6 in einer Schnittdarstellung gemäß Figur 6. Zwischen einer Auflagefläche des Optikhalters 4 für das optische Element 6 und dem optischem Element 6 ist ein elastisches Ausgleichselement 16 angeordnet. Das elastische Ausgleichselement 16 dient zum Ausgleich von Kräften, die bei der Klemmung des optischen Elements 6 entstehen. Weiter kann das elastische Ausgleichselement 16 als Dichtelement vorgesehen werden, um eine dichte Verbindung zwischen optischem Element 6 und dem Optikhalter 4 herzustellen.

Weiter kann zwischen dem Optikträger 2 und dem Optikhalter 4 eine Verdrehsicherung vorgesehen werden, so dass der Optikhalter 4 zwar in den Optikträger 2 eingeschoben werden kann, jedoch der Optikhalter 4 nicht in dem Optikträger 2 verdreht werden kann. Auch zwischen optischem Element 6 und dem Optikhalter 4 kann eine Verdrehsicherung vorgesehen werden. Die Verdrehsicherung kann in Form eines Vorsprungs und einer dazu passend geformten Nut oder Aussparung ausgebildet sein. Dadurch ist nach der finalen Montage eine Verdrehung des optischen Elements zu dem Optikträger vorteilhaft verhindert. Gemäß Figur 7 ist es auch vorgesehen, dass im Optikträger 2 weitere optische Elemente 20 vorgesehen sind.

### Bezugszeichen:

1 optoelektronischer Sensor
2 Optikträger
4 Optikhalter
6 optisches Element
8 Linse
10 Klemmhaken
12 Aufnahme für den Optikhalter
14 Anschlag des Optikträgers
16 elastisches Ausgleichselement
18 Überdeckung
20 optisches Element
22 Gehäuse
24 Frontscheibe
26 elektrischer Anschluss

## Patentansprüche

1. Optikträger mit einem Optikhalter (4) und einem optischen Element (6), wobei der Optikträger (2) eine Aufnahme (12) für den Optikhalter (4) aufweist und der Optikhalter (4) mindestens zwei Klemmhaken (10) zur Aufnahme und Befestigung des optischen Elements (6) aufweist,
**dadurch gekennzeichnet,**
**dass** der Optikhalter (4) mit dem eingesetzten optischen Element (6) in die Aufnahme (12) des Optikträgers (2) eingesetzt ist, wobei die Klemmhaken durch den Optikträger nach innen gebogen sind und plastisch verformt sind und gegen das optische Element gedrückt sind und die Klemmhaken (10) durch den Optikträger (2) in ihrer endgültigen Montageposition fixiert sind, so dass das optische Element in der eingesetzten finalen Endposition des Optikhalters (4) nicht mehr bewegbar oder entfernbar ist.

2. Optikträger nach Anspruch 1, **dadurch gekennzeichnet, dass** das optische Element (6) eine Linse (8) und/oder eine Blende und/oder ein Filter und/oder ein Spiegel ist.

3. Optikträger nach einem der vorhergehenden Ansprüche, **dadurch gekennzeichnet, dass** der Optikträger (2) und/oder der Optikhalter (4) eine Öffnung für Lichtstrahlen aufweist.

4. Optikträger nach einem der vorhergehenden Ansprüche, **dadurch gekennzeichnet, dass** der Optikträger (2) einen Anschlag (14) für den Optikhalter (4) aufweist.

5. Optikträger nach einem der vorhergehenden Ansprüche, **dadurch gekennzeichnet, dass** der Optikhalter (4) im Optikträger (2) fixiert ist.

6. Optikträger nach einem der vorhergehenden Ansprüche, **dadurch gekennzeichnet, dass** zwischen einer Auflagefläche des Optikhalters (4) für das optische Element (6) und dem optischem Element (6) ein elastisches Ausgleichselement (16) angeordnet ist.

7. Optikträger nach einem der vorhergehenden Ansprüche, **dadurch gekennzeichnet, dass** der Optikträger (2) und/oder der Optikhalter (4) aus Kunststoff hergestellt sind.

8. Optikträger nach einem der vorhergehenden Ansprüche, **dadurch gekennzeichnet, dass** der Optikträger (2) und/oder der Optikhalter (4) und/oder das optische Element (6) als Spritzgussteile hergestellt sind.

9. Verfahren zur Montage eines Optikträgers (2) mit einem Optikhalter (4) und einem optischen Element (6), wobei der Optikträger (2) den Optikhalter (4) aufnimmt und der Optikhalter (4) mit mindestens zwei Klemmhaken (10) das optische Element (6) aufnimmt,
**dadurch gekennzeichnet,**
**dass** der Optikhalter (4) mit dem eingesetzten optischen Element (6) in die Aufnahme (12) des Optikträgers (2) eingesetzt wird, wobei die Klemmhaken durch den Optikträger nach innen gebogen werden und plastisch verformt werden und gegen das optische Element gedrückt werden und die Klemmhaken (10) durch den Optikträger (2) in ihrer endgültigen Montageposition fixiert werden, so dass das optische Element in der eingesetzten finalen Endposition des Optikhalters (4) nicht mehr bewegbar oder entfernbar ist.

10. Optoelektronischer Sensor mit einem Optikträger (2) nach einem der Ansprüche 1 bis 8.

11. Lichtschranke mit einem Optikträger (2) nach einem der Ansprüche 1 bis 8.

## Claims

1. An optics carrier having an optics holder (4) and having an optical element (6), wherein the optics carrier (2) has a receiver (12) for the optics holder (4) and the optics holder (4) has at least two clamping hooks (10) for receiving and fastening the optical element (6),
**characterised in that**
the optics holder (4) with the inserted optical element (6) is inserted into the receiver (12) of the optics carrier (2), wherein the clamping hooks are bent inwardly and plastically deformed by the optics carrier and are pressed towards the optical element and the clamping hooks (10) are fixed in their final assembly position by the optics carrier (2) so that the optical element can no longer be moved or removed in the inserted final end position of the optics holder (4).

2. An optics carrier in accordance with claim 1, **characterised in that** the optical element (6) is a lens (8) and/or a diaphragm and/or a filter and/or a mirror.

3. An optics carrier in accordance with one of the preceding claims, **characterised in that** the optics carrier (2) and/or the optics holder (4) has/have an opening for light rays.

4. An optics carrier in accordance with any one of the preceding claims, **characterised in that** the optics carrier (2) has an abutment (14) for the optics holder (4).

5. An optics carrier in accordance with any one of the preceding claims, **characterised in that** the optics holder (4) is fixed in the optics carrier (2).

6. An optics carrier in accordance with any one of the preceding claims, **characterised in that** a resilient compensation element (16) is arranged between a support surface of the optics holder (4) for the optical element (6) and the optical element (6).

7. An optics carrier in accordance with any one of the preceding claims, **characterised in that** the optics carrier (2) and/or the optics holder (4) is/are manufactured from plastic.

8. An optics carrier in accordance with any one of the preceding claims, **characterised in that** the optics carrier (2) and/or the optics holder (4) and/or the optical element (6) is/are manufactured as injection moulded parts.

9. A method of assembling an optics carrier (2) having an optics holder (4) and having an optical element (6), wherein the optics carrier (2) receives the optics holder (4) and the optics holder (4) having at least two clamping hooks (10) receives the optical element (6),
**characterised in that**
the optics holder (4) with the inserted optical element (6) is inserted into the receiver (12) of the optics carrier (2), wherein the clamping hooks are bent inwardly and plastically deformed by the optics carrier and are pressed towards the optical element and the clamping hooks (10) are fixed in their final assembly position by the optics carrier (2) so that the optical element can no longer be moved or removed in the inserted final end position of the optics holder (4).

10. An optoelectronic sensor having an optics carrier (2) in accordance with any one of the claims 1 to 8.

11. A light barrier having an optics carrier (2) in accordance with any one of the claims 1 to 8.

## Revendications

1. Monture optique comprenant un moyen de maintien pour élément optique (4) et un élément optique (6), dans lequel la monture optique (2) comporte un récepteur (12) pour le moyen de maintien (4) et le moyen de maintien (4) comprend au moins deux crochets de serrage (10) pour la réception et la fixation de l'élément optique (6),
**caractérisée en ce que**
le moyen de maintien (4) est mis en place avec l'élément optique (6) inséré, dans le récepteur (12) de la monture optique (2), et les crochets de serrage sont recourbés vers l'intérieur par la monture optique et sont déformés de manière plastique et sont poussés contre l'élément optique, et les crochets de serrage (10) sont fixés par la monture optique (2) dans leur position de montage définitive de telle sorte que l'élément optique ne peut plus être déplacé ou enlevé dans la position finale mise en place du moyen de maintien (4) pour élément optique.

2. Monture optique selon la revendication 1, **caractérisée en ce que** l'élément optique (6) est une lentille (8) et/ou un diaphragme et/ou un filtre et/ou un miroir.

3. Monture optique selon l'une des revendications précédentes, **caractérisée en ce que** la monture optique (2) et/ou le moyen de maintien (4) comporte une ouverture pour les rayons de lumière.

4. Monture optique selon l'une des revendications précédentes, **caractérisée en ce que** la monture optique (2) comprend une butée (14) pour le moyen de maintien (4).

5. Monture optique selon l'une des revendications précédentes, **caractérisée en ce que** le moyen de maintien (4) est fixé dans la monture optique (2).

6. Monture optique selon l'une des revendications précédentes, **caractérisée en ce qu'**un élément de compensation élastique (16) est agencé entre une surface d'appui du moyen de maintien optique (4) pour l'élément optique (6) et l'élément optique (6).

7. Monture optique selon l'une des revendications précédentes, **caractérisée en ce que** la monture optique (2) et/ou le moyen de maintien (4) sont fabriqués en matière plastique.

8. Monture optique selon l'une des revendications précédentes, **caractérisée en ce que** la monture optique (2) et/ou le moyen de maintien (4) et/ou l'élément optique (6) sont fabriqués sous forme de pièces moulées par injection.

9. Procédé pour le montage d'une monture optique (2) avec un moyen de maintien pour élément optique (4) et un élément optique (6), dans lequel la monture optique (2) reçoit le moyen de maintien (4) et le moyen de maintien (4) reçoit l'élément optique (6) avec au moins deux crochets de serrage (10),
**caractérisé en ce que**
le moyen de maintien (4) avec l'élément optique inséré (6) est mis en place dans le récepteur (12) de la monture optique (2), dans lequel les crochets de serrage sont cintrés vers l'intérieur par la monture optique et sont déformés de manière plastique, et sont poussés contre l'élément optique, et les crochets de serrage (10) sont fixés dans leur position de montage définitive par la monture optique (2), de sorte que l'élément optique ne peut plus être déplacé ou enlevé dans la position finale insérée du moyen de maintien (4) pour élément optique.

10. Capteur optoélectronique comprenant une monture optique (2) selon l'une des revendications 1 à 8.

11. Barrière lumineuse avec une monture optique (2) selon l'une des revendications 1 à 8.
